# EUROPÄISCHE PATENTSCHRIFT

(11) **EP 0 393 218 B1**
(45) Veröffentlichungstag und Bekanntmachung des Hinweises auf die Patenterteilung: **06.07.1994**
(21) Anmeldenummer: 89107052.6
(22) Anmeldetag: 19.04.1989
(51) Int. Cl.: B62K 25/00, B62K 21/00

(54) **Gestell für ein Motorrad**
Motorcycle frame
Cadre de motocyclette

(43) Veröffentlichungstag der Anmeldung: 24.10.1990
(73) Patentinhaber: EMCO MAIER GESELLSCHAFT M.B.H., A-5400 Hallein (AT)
(72) Erfinder: Krispler, Walter, A-5421 Adnet (AT); Widl, Reinhold, A-5421 Adnet (AT)
(74) Vertreter: Schaumburg, Thoenes & Thurn

(56) Entgegenhaltungen:
- GB-A- 555 975
- GB-A- 1 274 441
- US-A- 4 526 249
- US-A- 4 662 469

## Beschreibung

Die Erfindung betrifft ein Gestell für ein Motorrad, umfassend einen Rahmen mit Mitteln zur Halterung eines Hinterrades, eine einarmige Schwinge, die im vorderen unteren Bereich des Rahmens um eine zur Hinterradachse parallele Schwenkachse schwenkbar am Rahmen angelenkt und nahe ihrem freien vorderen Ende mit einem Nabenträger zur Lagerung eines Vorderrades verbunden ist, eine Lenkvorrichtung mit einem am Rahmen schwenkbar gelagerten Lenkerträger und einem kardanischen Lenkgestänge mit mindestens zwei zueinander und zur Schwenkachse des Lenkerträgers senkrechten Gelenkachsen, und eine zwischen der Schwinge und dem Rahmen angeordnete Federungs- und Dämpfungsvorrichtung zur Dämpfung der Schwingenbewegung.

Bei einem aus der US-A-4 526 249 bekannten Gestell der vorstehend genannten Art ist der Nabenträger mit einem Arm des Lenkgestänges starr verbunden. Dieser Arm ist nahe dem Nabenträger mit einem zum Rahmen hinweisenden Fortsatz versehen, der über ein Kugelgelenk mit dem vorderen Ende der Schwinge verbunden ist. An seinem oberhalb des Vorderrades liegenden oberen Ende ist der Arm des Lenkgestänges über ein weiteres Kugelgelenk mit einer zweiten Schwinge verbunden, die am Rahmen angelenkt ist, so daß die beiden Schwingen, der Rahmen und der Arm des Lenkgestänges ein Gelenkviereck bilden. Die Lenkachse verläuft durch die beiden Kugelgelenke, deren Lage so gewählt ist, daß der Spurpunkt, d.h. der Schnittpunkt der Lenkachse mit dem Boden vor dem Auflagepunkt des Rades auf dem Boden liegt und somit ein die Radstellung stabilisierender Nachlauf erreicht wird.

Aus der GB-A-1 274 441 ist ein Motorrad bekannt, bei dem zur Vergrößerung des Nachlaufes und der Erhöhung der Stabilisierungswirkung der Nabenträger auf der Vorderachse, die in einer Gabelschwinge gehalten ist, um eine senkrecht zur Achse gerichtete Schwenkachse schwenkbar gelagert ist, die in der achsnormalen Mittelebene des Vorderrades liegt und durch dessen Achse verläuft. Der Nabenträger kann über eine Lenkgabel und ein mit dieser verbundenes Parallelogrammgestänge verschwenkt werden.

Der Erfindung liegt die Aufgabe zugrunde, ein Gestell der eingangs genannten Art anzugeben, das eine verbesserte Stabilisierung des Vorderrades bei kompaktem und einfachem Aufbau gewährleistet.

Diese Aufgabe wird durch die im kennzeichnenden Teil des Anspruchs 1 angegebenen Merkmale gelöst.

Beim erfindungsgemäßen Gestell liegt der Lenkpunkt genau in der Mitte des Vorderrades, während bei der eingangs beschriebenen bekannten Lösung die Lenkachse vom Radmittelpunkt zum Rahmen hin versetzt ist. Diese Versetzung verkürzt bei gleichem Neigungswinkel der Lenkachse den möglichen Nachlauf und verringert damit die vom Nachlauf herrührende Stabilisierungswirkung. Gleichzeitig ist die erfindungsgemäße Lösung äußerst einfach in ihrem Aufbau. Bei gleichem Nachlauf wie bei der bekannten Lösung ermöglicht sie eine kompaktere Bauweise des Motorrades, da das Vorderrad gegenüber der bekannten Lösung näher an den Rahmen herangerückt werden kann.

Vorzugsweise ist der Achsstumpf in der Schwinge um seine Längsachse drehbar gelagert und drehfest mit einem Hebel verbunden, der seinerseits über einen Doppellenker mit dem Rahmen derart verbunden ist, daß die Schwinge, der Hebel, der Doppellenker und der Rahmen ein Gelenkparallelogramm bilden. Dadurch wird sichergestellt, daß bei der Federungsbewegung der Schwinge die Lenkachse ihre Richtung im Raum beibehält. Gemäß einem wesentlichen Merkmal der vorliegenden Erfindung kann die Länge des Doppellenkers verstellbar sein, so daß der Winkel, den die Lenkachse mit der Vertikalen oder der Horizontalen bildet, einstellbar ist.

Um eine Auf- und Abbewegung der Schwinge zu ermöglichen, muß das Lenkgestänge in seiner Länge verstellbar sein. Dies kann in an sich bekannter Weise dadurch geschehen, daß das Lenkgestänge entweder ein Kniegelenk oder eine Teleskopanordnung umfaßt, wie dies später noch genauer erläutert wird.

Vorzugsweise greift die Schwinge mit einem von ihrer Schwenkachse nach rückwärts weisenden Abschnitt an einem Teil (Zylinder, Kolbenstange) eines Federbeines an, dessen anderer Teil (Kolbenstange, Zylinder) sich am Rahmen abstützt. Auf diese Weise werden Stöße, die von der Straße auf das Vorderrad einwirken, nicht über das Lenkgestänge auf den Lenkerträger und damit den Lenker, sondern unmittelbar im unteren Teil des Rahmens in den Rahmen eingeleitet.

Weitere Merkmale und Vorteile der Erfindung ergeben sich aus der folgenden Beschreibung, welche in Verbindung mit den Figuren die Erfindung anhand von Ausführungsbeispielen erläutert. Es zeigen:
- Fig. 1: eine teilweise schematische Seitenansicht des vorderen Abschnittes eines erfindungsgemäßen Motorrades,
- Fig. 2: eine Draufsicht auf die in der Figur 1 dargestellte Anordnung,
- Fig. 3: eine Frontansicht der in den Figuren 1 und 2 dargestellte Anordnung,
- Fig. 4: eine Seitenansicht des vorderen Abschnittes des erfindungsgemäßen Motorrades von der zur Figur 1 entgegengesetzten Seite,
- Fig. 5 u. Fig. 6: den Figuren 3 und 4 entsprechende Ansichten einer zweiten Ausführungsform eines erfindungsgemäßen Motorrades und
- Fig. 7: einen teilweise schematischen, die Radachse enthaltenden Schnitt durch den Achsstumpf, den Nabenträger und die Vorderradnabe.

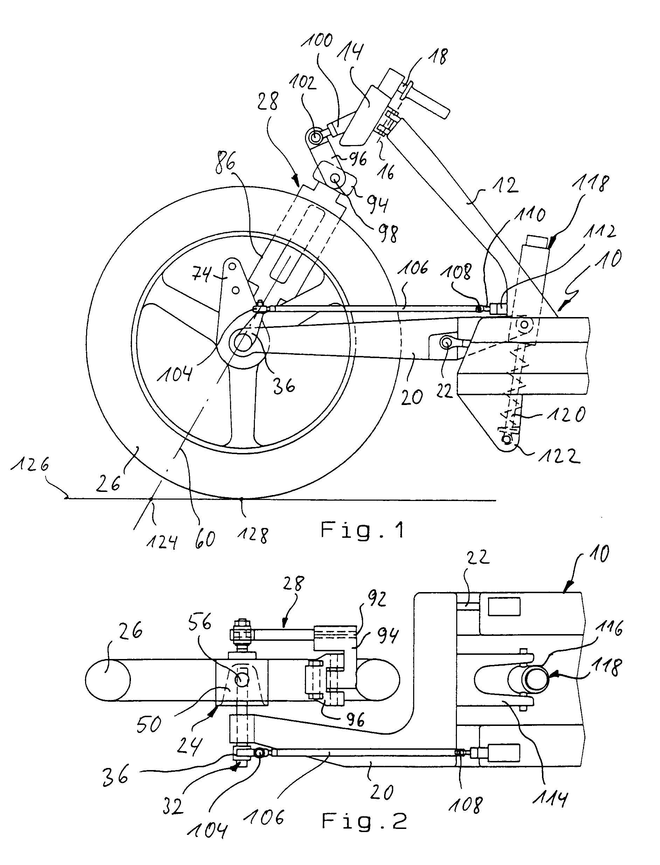

In Figur 1 ist mit 10 der Rahmen eines Motorrades bezeichnet, von dem in der Figur 1 nur die vordere Hälfte dargestellt ist. An dem schräg nach vorne und oben weisenden Bug 12 des Rahmens 10 ist ein Lenkerträger 14 um eine Schwenkachse 16 schwenkbar angelenkt. Der Lenkerträger 14 ist mit einem Lenker 18 starr verbunden.

Am vorderen unteren Ende des Rahmens 10 ist eine Schwinge 20 mit Hilfe von Gelenken 22 (Figuren 1 und 2) schwenkbar angelenkt, so daß sie auf und ab verschwenkt werden kann. Die einarmige Schwinge 20 hält an ihrem vorderen freien Ende in noch näher zu beschreibender Weise einen allgemein mit 24 bezeichneten Nabenträger, auf dem ein Vorderrad 26 gelagert ist und der über ein allgemein mit 28 bezeichnetes Lenkgestänge mit dem Lenkerträger 14 verbunden ist.

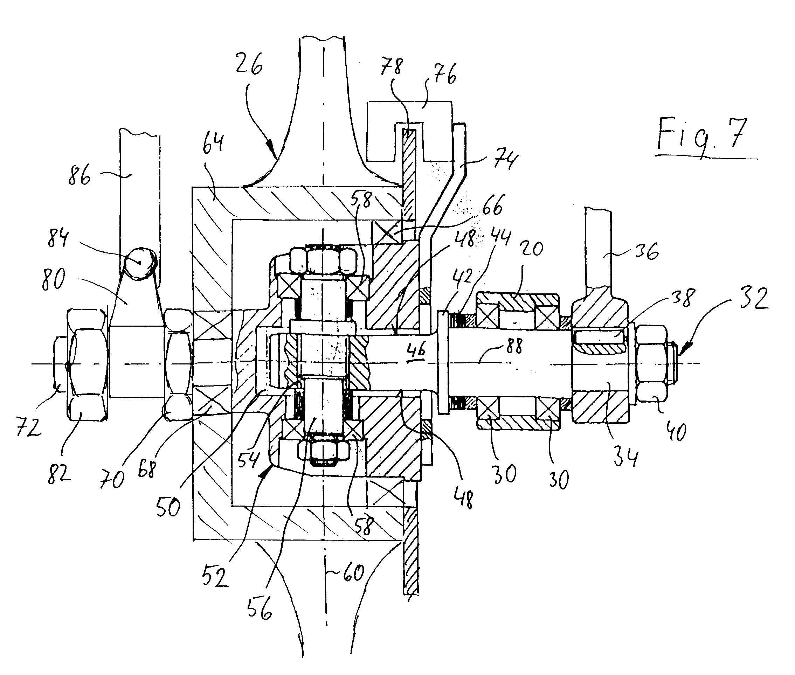

Anhand der Figur 7 soll nun zunächst die Halterung des Nabenträgers 24 an der Schwinge 20 beschrieben werden. In der Schwinge 20 ist mittels zweier Lager 30 ein Achsstumpf 32 drehbar gelagert. Auf einen in der Figur 7 rechts aus der Schwinge 20 herausragenden Abschnitt 34 des Achsstumpfes ist ein Hebel 36 aufgeschoben, der durch einen Keil 38 mit dem Achsstumpf 32 drehfest verbunden ist. Der Hebel 36 ist durch eine Mutter 40 gesichert. Die Funktion des Hebels 36 wird später noch näher erläutert.

Auf dem in der Figur 7 links aus der Schwinge 20 her ausragenden Abschnitt trägt der Achsstumpf 32 einen Flansch 42. Zwischen diesem und der Schwinge 20 befinden sich Distanzscheiben 44, mit denen die axiale Lage des Achsstumpfes 32 in der Schwinge 20 eingestellt werden kann.

Links von dem Flansch 42 schließt sich an diesen ein Abschnitt 46 des Achsstumpfes an, der unter Bildung zweier zueinander paralleler ebener Flächen 48 abgeflacht ist. Dieser Abschnitt 46 des Achsstumpfes 32 greift in eine schlitzförmige Aussparung 50 in einem trommelförmigen Nabenträger 52 ein. In der Draufsicht weist die Aussparung 50 eine annähernd V-förmige Gestalt auf, wie man dies in Figur 1 erkennen kann. Der Abschnitt 46 des Achsstumpfes 32 weist eine Bohrung 54 auf, die senkrecht zu den Flächen 48 gerichtet ist und durch die sich ein Bolzen 56 erstreckt, auf dem der Nabenträger 52 mit Hilfe von Lagern 58 um die Bolzenachse 60 schwenkbar gelagert ist. Der Schwenkwinkel wird durch das Spiel des Achsstumpfes 32 in der Aussparung 50 bestimmt.

Auf dem Nabenträger 52 ist die topfförmige Radnabe 64 des Vorderrades 26 mit Hilfe von Lagern 66 und 68 drehbar gelagert und mit Hilfe einer Mutter 70 gesichert, die auf eine mit dem Nabenträger 52 verbundene Achse 72 aufgeschraubt ist. Der Nabenträger 52 ist auf seiner der Schwinge 20 zugewandten Seite mit einem Bremssattelträger 74 starr verbunden, der einen nur schematisch angedeuteten Bremssattel 76 einer Scheibenbremse trägt. Dieser übergreift eine mit der Radnabe 64 drehfest verbundene Bremsscheibe 78.

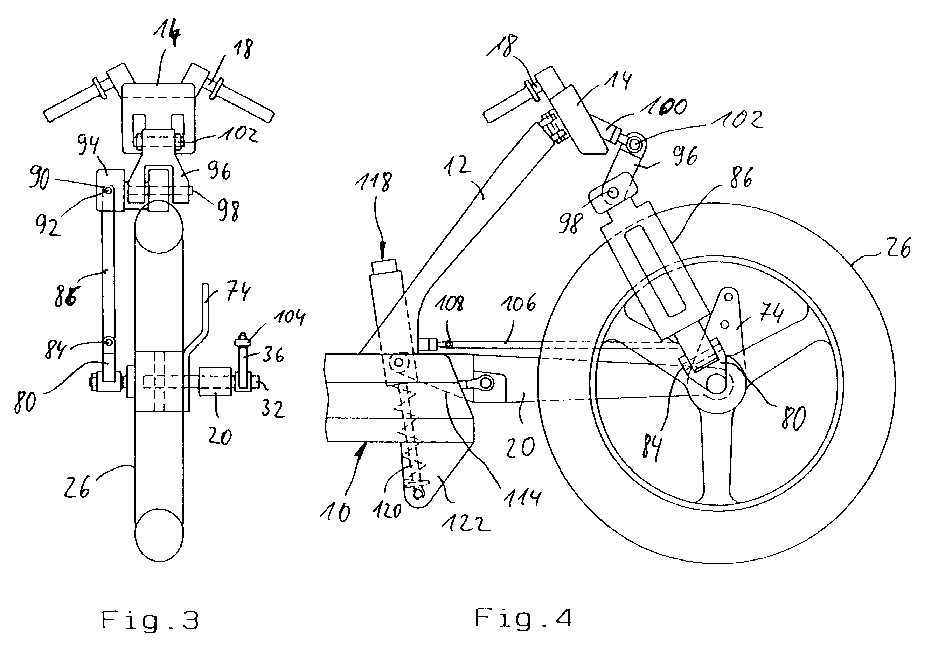

Das allgemein mit 28 bezeichnete Lenkgestänge umfaßt ein unteres Auge 80, das auf der Achse 72 drehbar gelagert und auf dieser durch eine Mutter 82 gesichert ist. Das Auge 80 ist über ein Gelenk 84 mit einem mittleren Gestängeabschnitt 86 gelenkig verbunden, wobei die Gelenkachse 84 senkrecht zur Längsachse 88 des Achsstumpfes 32 und zur Achse 16 des Bolzens 56 gerichtet ist. Der mittlere Gestängeabschnitt 86 ist an seinem oberen Ende über ein zweites Gelenk (Figur 3) 90 mit zur Gelenkachse 84 paralleler Gelenkachse 92 an einem Schenkel eines U-förmigen Zwischenstückes 94 angelenkt. Mit dem anderen Schenkel greift dieses U-förmige Zwischenstück 94 zwischen die Schenkel eines Gabelstückes 96, mit dem es durch ein Gelenkbolzen 98 mit parallel zur Radachse gerichteter Achse gelenkig verbunden ist. Das Gabelstück 96 ist mit seinem anderen Ende an zwei Augen 100 um eine zum Gelenkbolzen 98 parallele Achse 102 schwenkbar angelenkt. Die Augen 100 sind starr mit dem Lenkerträger 14 verbunden (Figur 1). Das mit Hilfe der Augen 100 und dem Gabelstück 96 gebildete Kniegelenk ermöglicht eine Längenänderung des Lenkgestänges, wenn die Schwinge 20 um die Gelenkachse 22 auf- und abschwingt.

Das freie Ende des Hebels 36 ist über ein Kugelgelenk 104 mit einem Ende eines Doppellenkers 106 gelenkig verbunden, der mit seinem anderen Ende über ein Gelenk 108 mit einem Zapfen 110 verbunden ist, der in einer rahmenfesten Buchse 112 axial verstellbar geführt ist. Die axiale Verstellung kann dabei beispielsweise über eine axial festliegende, aber drehbare Mutter erfolgen, in die der mit einem Außengewinde versehene Zapfen 110 eingreift. Der Doppellenker 106, die Schwinge 20, der Hebel 36 und der zwischen den Gelenken 108 und 22 liegende Teil des Rahmens bilden zusammen ein Gelenkviereck, das dafür sorgt, daß bei einer Bewegung der Schwinge 20 die Richtung des Hebels 36 und damit auch die Richtung des drehfest mit ihm verbundenen Bolzens 56 unverändert bleibt. Wie man leicht erkennen kann, bewirkt eine Verstellung des Zapfens 110 eine Verstellung der Winkel des Gelenkviereckes und damit der Neigung der Bolzenachse 60. Anstelle der Verstellung des Zapfens 10 könnte auch eine Verstellmöglichkeit vorgesehen sein, mit der die Länge des Doppellenkers 106 verändert werden kann.

Die Schwinge 20 trägt an ihrer zum Rahmen 10 hinweisenden Seite eine Gabel 114, die mit ihren Gabelzinken an dem Zylinder 116 eines Federbeines 118 gelenkig angreift, das sich mit seiner Kolbenstange 120 an einem rahmenfesten Träger 122 abstützt. Auf dies Weise werden Schwenkbewegungen der Schwinge 20 abgefedert und gedämpft. Stöße, die von der Straße über das Vorderrad 26 auf die Schwinge 20 einwirken, werden dadurch mindestens annähernd im Schwerpunkt des Motorrades direkt in den Rahmen 10 eingeleitet und wirken nicht auf den Lenker 18. Der negative Einfluß derartiger Kräfte auf das Fahrverhalten und die Lenkbarkeit des Motorrades kann dadurch auf ein Minimum reduziert werden.

Bei dem soweit beschriebenen Motorrad bewirkt die Lenkbewegung am Lenker 18 über das kardanische Lenkgestänge 28 ein Verschwenken des Rades um die Achse 60 des Bolzens 56, wobei sich aufgrund der Schrägstellung der Achse 60, die in der Radmittelebene liegt, das Vorderrad nach links oder rechts neigt. Der Lenkmittelpunkt liegt genau im Zentrum des Vorderrades 26.

Da die Lenkachse 60 durch die Achse des Vorderrades 26 verläuft, ergibt sich ein großer Abstand zwischen dem Schnittpunkt 124 der nach vorne verlängerten Lenkachse 60 mit dem Boden 126 und dem Berührungspunkt 128 zwischen dem Vorderrad 26 und dem Boden 126. Dieser Abstand wird als Nachlauf bezeichnet und gewährleistet die Selbstzentrierung, d.h. die selbsttätige Rückkehr des Vorderrades 26 in seine dem Geradeauslauf entsprechende Stellung. Das erfindungsgemäße Motorrad erhält somit ein starkes Moment, sich nach dem Durchfahren einer Kurve wieder selbsttätig aufzurichten und in den Geradeauslauf zurückzukehren.

Ferner erkennt man insbesondere aus der Figur 7, daß das Vorderrad 26 auf äußerst einfache Weise und schnell demontiert und montiert werden kann, was für Rennmaschinen von großem Vorteil ist. Es genügt, die beiden Muttern 82 und 70 zu lösen sowie den Bremssattel 76 von dem Bremssattelträger 74 abzunehmen, um das Vorderrad 26 von dem Nabenträger 52 abzunehmen.

Man erkennt ferner, daß es ohne große Mühe möglich ist, auf der der Schwinge 20 abgewandten Seite des Vorderrades ebenfalls einen Bremssattelträger drehfest mit dem Nabenträger 52 zu verbinden, so daß die Möglichkeit besteht, auch auf der anderen Seite des Vorderrades 26 eine Bremsscheibe vorzusehen, um zwei Scheibenbremsen am Vorderrad anbringen zu können.

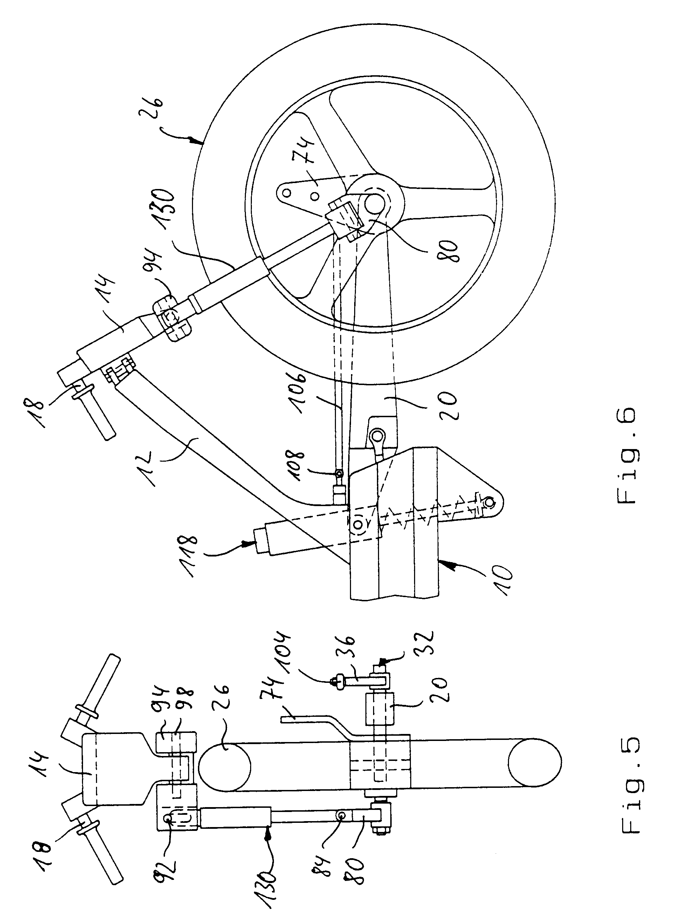

Die Ausführungsform gemäß den Figuren 5 und 6 unterscheidet sich von der bisher beschriebenen Ausführungsform lediglich durch eine etwas andere Gestaltung des Lenkgestänges. Der mittlere Gestängeabschnitt ist nicht wie bei der ersten Ausführungsform starr, sondern von einer Teleskopanordnung 130 gebildet, mit der die Längenänderung des Lenkgestänges bei einer Schwenkbewegung der Schwinge 20 möglich ist. Dadurch entfällt das aus den Teilen 100 und 96 gebildete Kniegelenk. Das Zwischenstück 94 ist direkt an dem Lenkerträger 14 angelenkt.

## Patentansprüche

1. Gestell für ein Motorrad, umfassend einen Rahmen (10) mit Mitteln zur Halterung eines Hinterrades, eine einarmige Schwinge (20), die im vorderen unteren Bereich des Rahmens (10) um eine zur Hinterradachse parallele Schwenkachse schwenkbar am Rahmen (10) angelenkt und nahe ihrem freien vorderen Ende mit einem Nabenträger (52) zur Lagerung eines Vorderrades (26) verbunden ist, eine Lenkvorrichtung mit einem am Rahmen (10) schwenkbar gelagerten Lenkerträger (14) und einem kardanischen Lenkgestänge (28) mit mindestens zwei zueinander und zur Schwenkachse (16) des Lenkerträgers (14) senkrechten Gelenkachsen (98, 92, 84), und eine zwischen der Schwinge (20) und dem Rahmen (10) angeordnete Federungs- und Dämpfungsvorrichtung (118) zur Dämpfung der Schwingenbewegung, dadurch **gekennzeichnet,** daß der Nabenträger (52) auf einem mit der Schwinge (20) verbundenen Achsstumpf (32) um eine senkrecht zu diesem gerichtete Schwenkachse (60) schwenkbar gelagert ist, die in der achsnormalen Mittelebene des Vorderrades (26) liegt und durch dessen Achse verläuft, daß der in den Nabenträger (52) eingreifende Abschnitt (46) des Achsstumpfes (32) abgeflacht und in einer schlitzförmigen achsparallel verlaufenden Aussparung (50) des trommelförmigen Nabenträgers (52) geführt ist, die sich zum festliegenden Ende des Achsstumpfes (32) hin V-förmig erweitert, und daß der Nabenträger (52) und der Achsstumpf (32) durch einen senkrecht zu den Flachseiten (48) des Achsstumpfes (32) und den hierzu parallelen Schlitzwänden gerichteten, den Nabenträger (52) diametral durchsetzenden Bolzen (56) miteinander verbunden sind.

2. Gestell nach Anspruch 1, dadurch **gekennzeichnet,** daß der Achsstumpf (32) in der Schwinge (20) um seine Längsachse (88) drehbar gelagert und drehfest mit einem Hebel (36) verbunden ist, der seinerseits über einen Doppellenker (106) mit dem Rahmen (10) derart verbunden ist, daß die Schwinge (20), der Hebel (36), der Doppellenker (106) und der Rahmen (10) ein Gelenkviereck bilden.

3. Gestell nach Anspruch 2, dadurch **gekennzeichnet,** daß die Länge des Doppellenkers (106) oder die Lage seiner Gelenke (104, 108) in Längsrichtung des Doppellenkers (106) verstellbar ist.

4. Gestell nach einem der Ansprüche 1 bis 3, dadurch **gekennzeichnet,** daß das Lenkgestänge (28) ein Kniegelenk (100, 96) umfaßt.

5. Gestell nach einem der Ansprüche 1 bis 3, dadurch **gekennzeichnet,** daß das Lenkgestänge (28) einen Teleskopabschnitt (130) umfaßt.

6. Gestell nach einem der Ansprüche 1 bis 5, dadurch **gekennzeichnet,** daß die Schwinge (20) mit einem von ihrer Schwenkachse nach rückwärts weisenden Abschnitt (114) an einem Teil (Zylinder (116), Kolbenstange (120)) eines Federbeines (118) angreift, dessen anderer Teil (Kolbenstange (120), Zylinder (116)) sich am Rahmen (10) abstützt.

## Claims

1. A motor cycle chassis, comprising a frame (10) with means for mounting a rear wheel, a one-arm rocker member (20) which, in the front bottom zone of the frame (10), is articulated on the latter to pivot about a pivot axis parallel to the rear wheel axis and, near its free front end, is connected to a hub member (52) for mounting a front wheel (26), a steering mechanism comprising a handlebar member (14) mounted pivotally on the frame (10) and a cardanic steering linkage (28) comprising at least two pivots (98, 92, 84), perpendicular to one another and to the pivot axis (16) of the handlebar member (14), and a suspension and shock-absorption means (118) disposed between the rocker member (20) and the frame (10) in order to damp the movement of the rocker member, characterised in that the hub member (52) is mounted on an axle stub (32) connected to the rocker member (20), so as to pivot about a pivot axis (60) extending perpendicularly to the axle stub, the pivot axis (60) being situated in the axis-normal central plane of the front wheel (26) and extending through the axis of the latter, in that that portion (46) of the axle stub (32) which engages in the hub member (52) is flattened and is guided in an axis-parallel recess (50) in the form of a slot in the drum-shaped hub member (52), said recess widening out in the form of a V towards the fixed end of the axle stub (32), and in that the hub member (52) and the axle stub (32) are interconnected by a bolt (56) extending diametrically through the hub member (52), said bolt (56) extending perpendicularly to the flat sides (48) of the axle stub (32) and to the slot walls parallel thereto.

2. A chassis according to claim 1, characterised in that the axle stub (32) is mounted in the rocker member (20) so as to be rotatable about its longitudinal axis and is non-rotatably connected to a lever (36) which is in turn so connected to the frame (10) via a double link (106) that the rocker member (20), lever (36), double link (106) and frame (10) form a link quadrilateral.

3. A chassis according to claim 2, characterised in that the length of the double link (106) or the position of its joints (104, 108) is adjustable in the longitudinal direction of the double link (106).

4. A chassis according to any one of claims 1 to 3, characterised in that the steering linkage (28) includes a toggle joint (100, 96).

5. A chassis according to any one of claims 1 to 3, characterised in that the steering linkage (28) includes a telescopic portion (130).

6. A chassis according to any one of claims 1 to 5, characterised in that a portion (114) of the rocker member (20) extending rearwardly of the pivot axis of said rocker (20) engages a part (cylinder (116), piston rod (120)) of a shock strut (118), the other part of which (piston rod (120), cylinder (116)) bears against the frame (10).

## Revendications

1. Chassis de motocyclette, comprenant un cadre (10) avec de moyens de montage d'une roue d'arrière, un bras oscillant (20) qui dans la zone avant inférieure du cadre (10) est articulé sur le cadre (10) de manière pivotante autour un pivot parallèle à l'essieu arrière et relié à proximité de son extrémité antérieure libre à un porte-moyeu (52) pour le logement d'une roue d'avant (26), un mécanisme de direction avec un porte-guidon (14) logé de manière pivotante sur le cadre (10) et avec une biellette de direction à la cardan (28) ayant au moins deux axes d'articulation (98, 92, 84) perpendiculaires l'un à l'autre et au pivot (16) du porte-guidon (14), et un dispositif de suspension élastique et d'amortissement (118) disposé entre le bras oscillant (20) et le cadre (10) pour amortir le mouvement du bras oscillant, caractérisé en ce que le porte-moyeu (52) est logé sur un tourillon (32), qui est relié au bras oscillant (20), de manière pivotante autour un pivot (60) orienté perpendiculairement au tourillon, ledit pivot se trouvant dans le plan médian normal à l'axe de la roue d'avant (26) et passant par l'axe de laquelle, en ce que la section (46) du tourillon (32) qui s'engage avec le porte-moyeu est aplatie et guidée dans une évidement (50) en forme de fente s'étendant parallèlement à l'axe du porte-moyeu (52) en forme de tambour, ladite évidement s'élargissant en forme de "V" vers le bout fixe du tourillon (32), et en ce que le porte-moyeu (52) et le tourillon (32) sont reliés l'un avec l'autre au moyen d'un boulon (56) qui est orienté perpendiculairement aux plats (48) du tourillon (32) et aux parois fendues parallèles aux plats et pénètre diamétralement le porte-moyeu (52).

2. Chassis selon la revendication 1, charactérisé en ce que le tourillon (32) est logé dans le bras oscillant (20) de manière tournante autour son axe longitudinal (88) et relié de manière non-tournante à un levier (36) qui de son côté est relié au cadre (10) au moyen d'une tige de joint articulé double (106) de façon que le bras oscillant (20), le levier (36), la tige de joint articulé double (106) et le cadre (10) forment un polygone articulé.

3. Chassis selon la revendication 2, caractérisé en ce que la longueur de la tige de joint articulé double (106) ou la position de ses articulations (104, 108) sont ajustables en la direction longitudinale de la tige de joint articulé double (106).

4. Chassis selon une des revendications 1 à 3, caractérisé en ce que la biellette de direction (28) comprend une genouillère (100, 96).

5. Chassis selon une des revendications 1 à 3, caractérisé en ce que la biellette de direction (28) comprend une section télescopique (130).

6. Chassis selon une des revendications 1 à 5, caractérisé en ce que le bras oscillant (20) avec une section (114) montrant en arrière de son pivot attaque sur une partie (cylindre (116), tige de piston (120)) d'une jambe de force à ressort (118), l'autre partie de laquelle (tige de piston (120), cylindre (116)) s'appuyant sur le cadre (10).
